# EUROPÄISCHE PATENTANMELDUNG

(11) **EP 1 391 655 A1**
(43) Veröffentlichungstag der Anmeldung: **25.02.2004**
(21) Anmeldenummer: 02018427.1
(22) Anmeldetag: 16.08.2002
(51) Int. Cl.: F23N 5/08, G05B 13/02, F23G 5/50

(54) **Verfahren zur Überwachung eines thermodynamischen Prozesses**

(71) Anmelder: Powitec Intelligent Technologies GmbH, 45219 Essen (DE)
(72) Erfinder: Stephan, Volker, 99976 Hüpstedt (DE); Wintrich, Franz, 45309 Essen (DE)
(74) Vertreter: Patentanwälte Hosenthien-Held und Dr. Held

(57) **Zusammenfassung**

In einem Verfahren zur Überwachung eines thermodynamischen Prozesses in einer Anlage, bei dem Bildmaterial des Prozesses erzeugt und das Bildmaterial einer Bildauswertung unterzogen wird, wird bei der automatisch erfolgenden Bildauswertung zumindest größtenteils ein Eigenwertproblem als Ansatz zugrunde gelegt.

## Beschreibung

Die Erfindung betrifft ein Verfahren zur Überwachung eines thermodynamischen Prozesses mit den Merkmalen des Oberbegriffs des Anspruches 1.

Bei einem bekannten Verfahren dieser Art werden zur Bildauswertung zunächst bestimmte Merkmale definiert, die dem Betreiber der Anlage zur Modellierung des Prozesses vielversprechend erscheinen. Beispielsweise werden bestimmte Momente definiert und das Bildmaterial dann auf dieses- notgedrungen reduzierte - Funktionensystem abgebildet. Die ausgewählten Merkmale - und nur diese - werden dann untersucht und zur Schaffung eines Prozeßmodells verwendet. Möglicherweise werden dabei die im Bildmaterial vorhandene Information nur teilweise extrahiert und verwendet.

Der vorliegenden Erfindung liegt die Aufgabe zugrunde, ein Verfahren der eingangs genannten Art zu verbessern. Diese Aufgabe wird durch ein Verfahren mit den Merkmalen des Anspruches 1 gelöst. Weitere vorteilhafte Ausgestaltungen sind Gegenstand der Unteransprüche.

Dadurch, daß bei der Bildauswertung ein Eigenwertproblem als Ansatz zugrunde gelegt wird, zumindest für den größten Teil des hochdimensionalen Bildraumes, kann in den Bildern enthaltene Information ohne nennenswerten Informationsverlust in einen niederdimensionalen Raum transformiert werden, um dann ausgewertet zu werden. Die Bilder werden dann durch charakteristische Bildmerkmale ("Eigenflames") dargestellt, welche sich aus dem Eigenwertproblem ergeben. Die Bildauswertung erfolgt automatisch, da der Auswertungsansatz dem System innewohnt und nicht von Merkmalen abhängt, welche der Betreiber der Anlage auswählt. Vorzugsweise werden singuläre Ereignisse, welche den Prozeß merklich beeinflussen können, bei der Lösung des Eigenwertproblems berücksichtigt, so daß diese späteren Bildauswertungen schneller identifiziert werden können.

Im folgenden ist die Erfindung anhand eines Ausführungsbeispiels näher erläutert.

In einem Müllverbrennungsofen als Anlage gemäß dem Ausführungsbeispiel läuft als beispielhafter thermodynamischer Prozeß ein Verbrennungsprozeß ab. Dieser Verbrennungsprozeß soll überwacht und dann so geregelt werden, daß er einerseits eine gewisse Stabilität und andererseits eine gewisse Plastizität aufweist, d.h. sich den Gegebenheiten anpaßt, wobei gewisse Optimierungsziele bestehen. Der Zustand im Müllverbrennungsofen wird beschrieben durch verschiedene Prozeßgrößen, von denen manche zugleich Stellgrößen bilden. Durch Aktionen, d.h. Änderungen von Stellgrößen, wird der Zustand im Müllverbrennungsofen geändert. Für die online-Überwachung und -Regelung und Vorhersagen über künftige Zustände des Müllverbrennungsofens ist auf einer Datenverarbeitungsanlage ein neuronales Netz implementiert.

Mittels einer Kamera wird der Verbrennungsprozeß bildlich erfaßt und der Datenverarbeitungsanlage zugeführt, wobei einerseits ein Video-Livebild angezeigt wird und andererseits aus der Bildinformation einige Prozeßgrößen ermittelt werden. Um die Information im Bildmaterial ohne nennenswerten Informationsverlust sinnvoll verarbeiten zu können, d.h. aufgrund der Komplexität zunächst in einen niederdimensionalen Raum transformieren zu können, wird - zumindest größtenteils - ein Eigenwertproblem als Ansatz gewählt, d.h. eine Art Hauptachsentransformation (Principal Component Analysis) versucht. Jedes Bild wird dann durch eine im allgemeinen kleine Menge von skalaren Eigenwerten (meist weniger als 20), d.h. transformierten Koordinaten im neuen Koordinatensystem, und vektoriellen "Eigenbilder" oder "Eigenflames", d.h. Koordinatenachsen für das neue Koordinatensystem beschrieben, wobei die eigenwertgrößten Eigenflames systemgemäß dominieren.

In einer klassischen Hauptachsentransformation müßten die Nullstellen des charakteristischen Polynoms der Kovarianzmatrix berechnet werden. Um das System von orthononnalen Eigenflames zu erhalten, kann aber alternativ ein stochastisches Approximationsverfahren auf einem neuronalen Netzes verwendet werden, bei dem zunächst die Wichtungen aller Neuronen zufällig initialisiert und dann mit dem Bildmaterial zunächst die Wichtungen des ersten Neurons iterativ adaptiert werden, dann des zweiten Neurons etc.

Die Eigenflames ergeben sich weitgehend als kompakte Regionen, da benachbarte Pixel auch benachbarte Raumwinkel im Ofen beobachten, deren Lichtemisionen stark korrelieren. Daher werden aus der Menge aufgenommener Bilder - außer einigen durchschnittlichen Helligkeitsverteilungen - insbesondere auch singuläre Ereignisse als Ansatz von Eigenflames für das Eigenwertproblem ausgewählt, wie beispielsweise das Aufplatzen eines Müllbehälters.

Mit den aus dem - zumindest größtenteils gelösten - Eigenwertproblem ermittelbaren Prozeßgrößen wird im neuronalen Netz ein Prozeßmodell geschaffen, mit dem genauere Vorhersagen gemacht werden können. Ein singuläres Ereignis wird mit diesem Ansatz rasch erkannt, so daß dann verschiedene zusätzliche Messungen gestartet werden können, wie beispielsweise eine Probenentnahme, um mehr Information über den aktuellen Zustand des Prozesses nach dem singulären Ereignis zu erhalten.

Da die Bildauswertung nicht mehr von einer festgelegten Merkmalsauswahl abhängt, sondern sich selbst passende Information aus dem Bildmaterial extrahiert, kann die Bildauswertung automatisiert werden. Zudem ist die Gefahr, daß relevante Informationen im Bildmaterial nicht beachtet werden, deutlich reduziert.

## Patentansprüche

1. Verfahren zur Überwachung eines thermodynamischen Prozesses in einer Anlage, bei dem Bildmaterial des Prozesses erzeugt und das Bildmaterial einer Bildauswertung unterzogen wird, **dadurch gekennzeichnet, daß** bei der automatisch erfolgenden Bildauswertung zumindest größtenteils ein Eigenwertproblem als Ansatz zugrunde gelegt wird.

2. Verfahren nach Anspruch 1, **dadurch gekennzeichnet, daß** das Bildmaterial zumindest weitgehend durch Eigenflames und transformierte Koordinaten dargestellt wird.

3. Verfahren nach Anspruch 2, **dadurch gekennzeichnet, daß** auch singuläre Ereignisse als Ansatz für Eigenflames gewählt werden.

4. Verfahren nach einem der vorhergehenden Ansprüche, **dadurch gekennzeichnet, daß** der thermodynamische Prozeß in einem Müllverbrennungsofen als Anlage stattfindet.

5. Verfahren nach Anspruch 3 und 4, **dadurch gekennzeichnet, daß** das Aufplatzen eines Müllbehälters ein singuläres Ereignis ist.

6. Verfahren nach einem der vorhergehenden Ansprüche, **dadurch gekennzeichnet, daß** aus der Bildauswertung Prozeßgrößen ermittelt, mit Optimierungszielen verglichen und zur Regelung des Prozesses geeignete Aktionen durchgeführt werden.

7. Vorrichtung zur Durchführung eines Verfahrens nach einem der vorhergehenden Ansprüche, mit wenigstens einer Kamera zur Erzeugung des Bildmaterials und einer Datenverarbeitungsanlage zur automatischen Bildauswertung.

8. Vorrichtung nach Anspruch 7, **dadurch gekennzeichnet, daß** auf der Datenverarbeitungsanlage ein neuronales Netz implementiert ist.
